# EUROPÄISCHE PATENTSCHRIFT

(11) **EP 2 415 228 B1**
(45) Veröffentlichungstag und Bekanntmachung des Hinweises auf die Patenterteilung: **11.05.2016**
(21) Anmeldenummer: 10710579.3
(22) Anmeldetag: 23.03.2010
(51) Int. Cl.: H04L 29/06

(54) **VERFAHREN ZUM LESEN VON ATTRIBUTEN AUS EINEM ID-TOKEN ÜBER EINE MOBILFUNKVERBINDUNG**
METHOD FOR READING ATTRIBUTES OF A TOKEN VIA A WIRELESS CONNECTION
PROCEDE DE LECTURE DES ATTRIBUTES D'UN TOKEN UTILISANT UNE CONNEXION RADIO

(30) Priorität: 30.03.2009 DE 102009001959
(43) Veröffentlichungstag der Anmeldung: 08.02.2012
(73) Patentinhaber: Bundesdruckerei GmbH, 10958 Berlin (DE)
(72) Erfinder: KÜTER, Joachim, 10179 Berlin (DE)
(74) Vertreter: Richardt Patentanwälte PartG mbB
(86) Internationale Anmeldenummer: PCT/EP2010/053733
(87) Internationale Veröffentlichungsnummer: WO 2010/112368

(56) Entgegenhaltungen:
- GB-A- 2 406 925
- US-A1- 2001 045 451
- US-A1- 2005 105 734
- US-A1- 2006 136 717
- REXHA B: "Increasing User Privacy in Online Transactions with X.509 v3 Certificate Private Extensions and Smartcards" 19. Juli 2005 (2005-07-19), E-COMMERCE TECHNOLOGY, 2005. CEC 2005. SEVENTH IEEE INTERNATIONAL CONF ERENCE ON MUNICH, GERMANY 19-22 JULY 2005, PISCATAWAY, NJ, USA,IEEE, PAGE(S) 293 - 300 , XP010846208 ISBN: 978-0-7695-2277-7 Seite 2, rechte Spalte, Zeile 20 - Seite 6, rechte Spalte, Zeile 39; Abbildungen 2,3
- MARIE REVEILHAC ET AL: "Promising Secure Element Alternatives for NFC Technology", PROCEEDINGS 2009 FIRST INTERNATIONAL WORKSHOP ON NEAR FIELD COMMUNICATION - NFC '09, IEEE, PISCATAWAY, NJ, USA, 24 February 2009 (2009-02-24), pages 75-80, XP031500082, ISBN: 978-0-7695-3577-7

## Beschreibung

Die Erfindung betrifft ein Verfahren zum Lesen von zumindest einem Attribut aus einem ID-Token, ein Computerprogrammprodukt, einen ID-Token sowie ein Computersystem.

Aus dem Stand der Technik sind verschiedene Verfahren zur Verwaltung der so genannten digitalen Identität eines Benutzers bekannt:

Microsoft Windows CardSpace ist ein Client-basiertes digitales Identitätssystem, welches es Internetbenutzern ermöglichen soll, deren digitale Identität gegenüber Online-Diensten mitzuteilen. Nachteilig ist hierbei unter anderem, dass der Nutzer seine digitale Identität manipulieren kann.

Bei OPENID handelt es sich dagegen um ein Server-basiertes System. Ein so genannter Identity-Server speichert eine Datenbank mit den digitalen Identitäten der registrierten Nutzer. Nachteilig ist hieran unter anderem ein mangelhafter Datenschutz, da die digitalen Identitäten der Nutzer zentral gespeichert werden und das Nutzerverhalten aufgezeichnet werden kann.

Aus US 2007/0294431 A1 ist ein weiteres Verfahren zur Verwaltung der digitalen Identitäten bekannt, welches ebenfalls eine Nutzerregistrierung erfordert.

Ferner sind Token-basierte Authentifizierungsverfahren beispielsweise aus US 2001/0045451 A1 und US 6 257 486 B1 bekannt.

Weitere Token-basierte Authentifizierungsverfahren sind in den zum Anmeldezeitpunkt unveröffentlichten Patentanmeldungen DE 10 2008 000 067.1-31, DE 10 2008 040 416.0-31 und DE 10 2008 042 262.2-31 derselben Patentanmelderin offenbart.

Die Druckschrift US 2006/0136717 A1 offenbart ein System und ein Verfahren zur Authentifizierung über ein in der Nähe befindliches Gerät. Dabei werden von einem Benutzer an einem Eingabegerät Zugangsdaten eingegeben, die authentifiziert und zu Geräten übertragen werden. Die Geräte übertragen die Zugangsdaten anschließend an einen Zugangsserver in dem System. Der Zugangsserver ermöglicht den Geräten den Zugang zu bestimmten Diensten. Das hierbei zur Authentifizierung verwendete Zertifikat wird für keine weiteren Funktionen verwender, noch eignet sich sein Inhalt dafür.
Die Druckschrift GB 2 406 925 A offenbart ein Verfahren zur Authentifizierung einer Transaktion mittels Authentifizierungsdaten, die auf einem Speichermedium abgelegt sind. Dabei wird ein Speichermedium, beispielsweise eine SIM-Karte, mit einer Rechnereinheit verbunden, das dazu dient, den Benutzer zu identifizieren bzw. zu authentifizieren. Für den Fall, dass der Authentifizierungsschritt erfolgreich war, erhält der Benutzer beispielsweise Zugang zu einer Applikation, die beispielsweise auf einem Applikationsserver abgelegt ist. Dadurch kann der dieser SIM-Karte zugeordnete Benutzer mit Gebühren für die Nutzung des Applikationsservers belegt werden.

Der Erfindung liegt demgegenüber die Aufgabe zugrunde, ein verbessertes Verfahren zum Lesen zumindest eines Attributs zu schaffen, sowie ein entsprechendes Computerprogrammprodukt, einen ID-Token und ein Computersystem.

Die der Erfindung zugrunde liegenden Aufgaben werden jeweils mit den Merkmalen der unabhängigen Patentansprüche gelöst. Ausführungsformen der Erfindung sind in den abhängigen Ansprüchen angegeben.

Nach Ausführungsformen der Erfindung wird ein Verfahren zum Lesen zumindest eines in einem ID-Token gespeicherten Attributs geschaffen, wobei der ID-Token einem Nutzer zugeordnet ist. Das Verfahren beinhaltet die folgenden Schritte: Authentifizierung des Nutzers gegenüber dem ID-Token, Aufbau einer Mobilfunkverbindung zwischen einem Mobilfunkgerät und einem ersten Computersystem, wobei das Mobilfunkgerät eine zweite Schnittstelle aufweist, Aufbau einer geschützten Verbindung über die Mobilfunkverbindung und über die ersten und zweiten Schnittstellen zwischen dem ersten Computersystems und dem ID-Token, Authentifizierung des ersten Computersystems gegenüber dem ID-Token über die geschützte Verbindung, nach erfolgreicher Authentifizierung des Nutzers und des ersten Computersystems gegenüber dem ID-Token, Lesezugriff des ersten Computersystems auf das zumindest eine in dem ID-Token gespeicherte Attribut zur Übertragung des zumindest einen Attributs nach dessen Signierung über ein Netzwerk. Hierdurch kann ein "Vertrauensanker" geschaffen werden.

Die Erfindung ermöglicht das Lesen eines oder mehrerer der in einem ID-Token gespeicherten Attribute durch das erste Computersystem, wobei die Verbindung zwischen dem ID-Token und dem ersten Computersystem über eine Mobilfunkverbindung aufgebaut werden kann. Bei dem zumindest einem Attribut kann es sich um eine Angabe bezüglich der Identität des dem ID-Token zugeordneten Nutzers handeln, insbesondere bezüglich dessen so genannter digitaler Identität. Beispielsweise werden durch das erste Computersystem die Attribute Name, Vorname, Adresse gelesen, um diese Attribute an ein zweites Computersystem, zum Beispiel eines Online-Dienstes, weiterzuleiten.

Es kann aber zum Beispiel auch nur ein einzelnes Attribut gelesen werden, welches nicht zur Feststellung der Identität des Nutzers, sondern beispielsweise zur Überprüfung der Berechtigung des Benutzers zur Inanspruchnahme eines bestimmten Online-Dienstes dient, wie zum Beispiel das Alter des Nutzers, wenn dieser einen Online-Dienst in Anspruch nehmen möchte, der einer bestimmten Altersgruppe vorbehalten ist, oder ein anderes Attribut, welches die Zugehörigkeit des Nutzers zu einer bestimmten Gruppe dokumentiert, welche zur Nutzung des Online-Dienstes berechtigt ist.

Bei dem ID-Token kann es sich um ein tragbares elektronisches Gerät, wie zum Beispiel einen so genannten USB-Stick, handeln oder um ein Dokument, insbesondere ein Wert- oder Sicherheitsdokument.

Unter einem "Dokument" werden erfindungsgemäß papierbasierte und/oder kunststoffbasierte Dokumente verstanden, wie zum Beispiel Ausweisdokumente, insbesondere Reisepässe, Personalausweise, Visa sowie Führerscheine, Fahrzeugscheine, Fahrzeugbriefe, Firmenausweise, Gesundheitskarten oder andere ID-Dokumente sowie auch Chipkarten, Zahlungsmittel, insbesondere Bankkarten und Kreditkarten, Frachtbriefe oder sonstige Berechtigungsnachweise, in die ein Datenspeicher zur Speicherung des zumindest einen Attributs integriert ist.

Ausführungsformen der Erfindung sind also besonders vorteilhaft, da das zumindest eine Attribut aus einem besonders vertrauenswürdigen Dokument, beispielsweise einem amtlichen Dokument, ausgelesen wird. Von besonderem Vorteil ist weiterhin, dass eine zentrale Speicherung der Attribute nicht erforderlich ist. Die Erfindung ermöglicht also ein besonders hohes Maß an Vertrauenswürdigkeit hinsichtlich der Mitteilung der zu einer digitalen Identität gehörenden Attribute, verbunden mit einem optimalen Datenschutz bei äußerst bequemer Handhabung.

Nach einer Ausführungsform der Erfindung hat das erste Computersystem zumindest ein Zertifikat, welches zur Authentifizierung des ersten Computersystems gegenüber dem ID-Token verwendet wird. Das Zertifikat beinhaltet eine Angabe derjenigen Attribute, für welche das erste Computersystem eine Leseberechtigung hat. Der ID-Token prüft anhand dieses Zertifikats, ob das erste Computersystem die erforderliche Leseberechtigung für den Lesezugriff auf das Attribut hat, bevor ein solcher Lesezugriff durch das erste Computersystem durchgeführt werden kann.

Unter einem Zertifikat" wird hier ein digitales Zertifikat verstanden, welches auch als Public-Key-Zertifikat bezeichnet wird. Bei einem Zertifikat handelt es sich um strukturierte Daten, die dazu dienen, einen öffentlichen Schlüssel eines asymmetrischen Kryptosystems einer Identität, wie z.B. einer Person, einer Organisation oder einem Computersystem, zuzuordnen. Beispielsweise kann das Zertifikat dem Standard X.509 oder einem anderen Standard entsprechen.

Nach einer Ausführungsform der Erfindung sendet das erste Computersystem das zumindest eine von dem ID-Token ausgelesene Attribut unmittelbar an ein zweites Computersystem. Bei dem zweiten Computersystem kann es sich zum Beispiel um einen Server zur Erbringung eines Online-Dienstes oder eines sonstigen Dienstes, wie zum Beispiel einer Bankdienstleistung oder zur Bestellung eines Produkts handeln. Beispielsweise kann der Nutzer ein Konto online eröffnen, wozu Attribute, die die Identität des Nutzers beinhalten, von dem ersten Computersystem an das zweite Computersystem einer Bank übertragen werden.

Nach einer Ausführungsform der Erfindung erfolgt die Übertragung der aus dem ID-Token gelesenen Attribute von dem ersten Computersystem zunächst an ein drittes Computersystem des Nutzers. Beispielsweise hat das dritte Computersystem einen üblichen Internetbrowser, mit dem der Nutzer eine Webseite des zweiten Computersystems öffnen kann. Der Nutzer kann in die Webseite eine Anforderung oder Bestellung für einen Dienst oder ein Produkt eingeben.

Das zweite Computersystem spezifiziert daraufhin diejenigen Attribute, zum Beispiel des Nutzers oder seines ID-Tokens, welche es für die Erbringung des Dienstes oder die Annahme der Bestellung benötigt. Die entsprechende Attributspezifikation, die die Spezifizierung dieser Attribute beinhaltet, wird sodann von dem zweiten Computersystem an das erste Computersystem gesendet. Dies kann mit oder ohne Zwischenschaltung des dritten Computersystems erfolgen. Im letzteren Fall kann der Nutzer das gewünschte erste Computersystem gegenüber dem zweiten Computersystem spezifizieren, beispielsweise durch Eingabe der URL des ersten Computersystems in eine Webseite des zweiten Computersystems von dem dritten Computersystem aus.

Nach einer Ausführungsform der Erfindung beinhaltet die Dienst-Anforderung des Nutzers an das zweite Computersystem die Angabe eines Identifikators, wobei der Identifikator das erste Computersystem identifiziert. Beispielsweise handelt es sich bei dem Identifikator um einen Link, beispielsweise eine URL des ersten Computersystems.

Nach einer Ausführungsform der Erfindung wird die Attributspezifizierung nicht unmittelbar von dem zweiten Computersystem an das erste Computersystem gesendet, sondern zunächst von dem zweiten Computersystem an das dritte Computersystem.

Nach einer Ausführungsform der Erfindung werden die aus dem ID-Token ausgelesenen Attribute von dem ersten Computersystem signiert und dann an das dritte Computersystem übertragen. Der Nutzer des dritten Computersystems kann die Attribute also lesen, ohne sie jedoch verändern zu können. Erst nach Freigabe durch den Nutzer werden die Attribute von dem dritten Computersystem an das zweite Computersystem weitergeleitet.

Nach einer Ausführungsform der Erfindung wird das zumindest eine von dem ersten Computersystem aus dem ID-Token gelesene Attribut an das dritte Computersystem gesendet, von wo es nach Freigabe durch den Nutzer an das zweite Computersystem weitergesendet wird.

Nach einer Ausführungsform der Erfindung kann der Nutzer die Attribute vor deren Weiterleitung durch weitere Daten ergänzen.

Nach einer Ausführungsform der Erfindung hat das erste Computersystem mehrere Zertifikate mit verschiedenen Leserechten. Aufgrund des Empfangs der Attributspezifikation wählt das erste Computersystem eines oder mehrere dieser Zertifikate aus, um die entsprechenden Attribute aus dem ID-Token oder mehreren verschiedenen ID-Token auszulesen. Ausführungsformen der Erfindung sind ganz besonders vorteilhaft, da ein Mobilfunkgerät, wie zum Beispiel ein sogenanntes Handy oder ein Smartphone, für den Lesezugriff des ersten Computersystems auf den ID-Token verwendet werden kann. Hierzu hat der ID-Token eine erste Schnittstelle und
das Mobilfunkgerät hat neben seiner Mobilfunk-Schnittstelle eine weitere, zweite Schnittstelle. Über die ersten und zweiten Schnittstellen können Daten zwischen dem ID-Token und dem Mobilfunkgerät ausgetauscht werden.

Die ersten und zweiten Schnittstellen haben beispielsweise eine relativ geringe Reichweite, von weniger als 1 m, insbesondere weniger als 20 cm. Insbesondere können die ersten und zweiten Schnittstellen für eine sogenannte Nahfeldkommunikation, insbesondere nach einem Near Field Communication (NFC) Standard und/oder nach dem Standard ISO/IEC 14443 ausgebildet sein.

Die Mobilfunk-Schnittstelle des Mobilfunkgeräts kann zur Kommunikation über ein digitales zellulares Mobilfunknetzwerk ausgebildet sein, wie zum Beispiel nach einem Mobilfunkstandard, insbesondere nach einem oder mehreren der GSM, UMTS, CDMA und/oder CDMA 2000 Standards. Von besonderem Vorteil ist hier insbesondere, dass ein Benutzer das üblicherweise ohnehin vorhandene Mobilfunkgerät zur Ermöglichung des Zugriffs des ersten Computersystems auf den ID-Token verwenden kann, ohne dass ein zusätzliches Lesegerät erforderlich ist.

Nach einer Ausführungsform der Erfindung wird von dem dritten Computersystem an das erste Computersystem eine Nachricht gesendet. Durch die Nachricht wird eine Anforderung von dem dritten Computersystem an das erste Computersystem gerichtet, um zumindest eines der Attribute aus dem ID-Token auszulesen. Die Nachricht kann eine Attributspezifizierung der von dem ersten Computersystem aus dem ID-Token auszulesenden ein oder mehreren Attribute beinhalten. Alternativ werden aufgrund der Nachricht von dem ersten Computersystem ein oder mehrere vorbestimmte Attribute aus dem ID-Token ausgelesen oder beispielsweise sämtliche Attribute, auf die das erste Computersystem in dem ID-Token Zugriff hat.

Zum Senden der Nachricht wird zwischen dem dritten Computersystem und dem ersten Computersystem eine erste Verbindung aufgebaut, wie zum Beispiel über das Internet. Aufgrund des Empfangs der Nachricht von dem dritten Computersystem über die erste Verbindung erzeugt das erste Computersystem eine Kennung, durch welche die erste Verbindung und/oder die Nachricht und/oder das dritte Computersystem eindeutig identifiziert wird.

Diese Kennung sendet das erste Computersystem beispielsweise über die erste Verbindung zurück an das dritte Computersystem. Von dem dritten Computersystem wird dann die Kennung an das Mobilfunkgerät übertragen. Das Mobilfunkgerät überträgt dann diese Kennung über eine zweite Verbindung an das erste Computersystem, wobei es sich bei der zweiten Verbindung um eine Mobilfunkverbindung handelt.

Aufgrund des Empfangs derselben Kennung, die das erste Computersystem zuvor an das dritte Computersystem gesendet hatte, über die Mobilfunkverbindung durch das erste Computersystem ist somit die Mobilfunkverbindung bzw. das Mobilfunkgerät dem dritten Computersystem eindeutig zugeordnet.

Das erste Computersystem baut dann die geschützte Verbindung über diese Mobilfunkverbindung auf, um hierüber auf den ID-Token lesend zuzugreifen. Da über die Kennung die ersten und zweiten Verbindungen bzw. das dritte Computersystem und das Mobilfunkgerät eindeutig einander zugeordnet sind, so ist auch der ID-Token, auf den über das Mobilfunkgerät zugegriffen wird, dem dritten Computersystem eindeutig zugeordnet. Hieraus folgt, dass die von dem ersten Computersystem aus dem ID-Token ausgelesenen ein oder mehreren Attribute dem dritten Computersystem und/oder dem Nutzer des dritten Computersystems, der gleichzeitig auch der Nutzer des ID-Tokens ist, zugeordnet sind.

Bei der Kennung kann es sich beispielsweise um eine Zufallszahl oder einen Globally Unique Identifier (GUID) handeln. Bei der Kennung kann es sich auch um einen kryptografischen Schlüssel, wie zum Beispiel einen symmetrischen oder einen asymmetrischen Schlüssel handeln, um die Zuordnung zwischen den ersten und zweiten Verbindungen bzw. dem dritten Computersystem und dem Mobilfunkgerät und damit dem ID-Token herzustellen.

Nach einer Ausführungsform der Erfindung sendet das erste Computersystem die Kennung alternativ oder zusätzlich über die zweite Verbindung, d.h. die Mobilfunkverbindung, an das Mobilfunkgerät. Die Kennung wird dann von dem Mobilfunkgerät an das dritte Computersystem übertragen. Das dritte Computersystem sendet dann die Kennung über die erste Verbindung zurück an das erste Computersystem, sodass die Zuordnung wiederum gegeben ist.

Nach einer Ausführungsform der Erfindung sendet das erste Computersystem das oder die signierten Attribute an das dritte Computersystem. Zusätzlich zu den Attributen und deren Signatur kann auch die Kennung und/oder eine Signatur der Kennung oder eine über die Attribute und die Kennung gebildete Signatur von dem ersten Computersystem an das dritte Computersystem gesendet werden.

Nach einer Ausführungsform der Erfindung wird die geschützte Verbindung mit einer Ende-zu-Ende-Verschlüsselung zwischen dem ID-Token und dem ersten Computersystem über die ersten und zweiten Schnittstellen sowie die Mobilfunkverbindung aufgebaut. Dadurch wird sichergestellt, dass die einseitige oder gegenseitige Authentifizierung des ersten Computersystems und des ID-Tokens sowie die Übertragung des oder der aus dem ID-Token ausgelesenen Attribute über die geschützte Verbindung unverfälscht stattfinden kann.

Nach einer Ausführungsform der Erfindung kann die Übertragung der Kennung von dem dritten Computersystem an das Mobilfunkgerät bzw. von dem Mobilfunkgerät an das dritte Computersystem manuell durch den Nutzer vorgenommen werden. Hierzu wird die Kennung auf einer Anzeige des dritten Computersystems bzw. des Mobilfunkgeräts angezeigt, sodass der Nutzer die Kennung von dort ablesen und manuell über eine Tastatur in das jeweils andere Gerät, d.h. das dritte Computersystem oder das Mobilfunkgerät, eingeben kann.

Nach einer Ausführungsform der Erfindung erfolgt die Übertragung der Kennung zwischen dem dritten Computersystem und dem Mobilfunkgerät zumindest teilweise automatisch. Dies kann zum Beispiel auf optischem Wege erfolgen. Beispielsweise wird die Kennung in Form eines maschinenlesbaren Musters auf der Anzeige ausgegeben, insbesondere in Form eines zweidimensionalen Barcodes. Dieses maschinenlesbare Muster, insbesondere also der zweidimensionale Barcode, wird dann optisch zum Beispiel mit Hilfe einer in das Mobilfunkgerät integrierten Kamera oder einer Kamera des dritten Computersystems, insbesondere einer sogenannten Webcam, optisch erfasst.

Nach einer weiteren Ausführungsform der Erfindung wird über das Mobilfunknetz eine Verbindung zwischen dem dritten Computersystem und dem Mobilfunkgerät aufgebaut, um hierüber die Kennung zu übertragen.

Nach einer weiteren Ausführungsform der Erfindung hat das dritte Computersystem eine weitere Schnittstelle, die in ihrer Funktionalität der ersten Schnittstelle des ID-Tokens entspricht, und über die das dritte Computersystem also beispielsweise über Funk nach einem NFC-Standard mit der zweiten Schnittstelle des Mobilfunkgeräts kommunizieren kann. Über diese weitere Schnittstelle des dritten Computersystems kann insbesondere die Kennung übertragen werden.

Nach einer Ausführungsform der Erfindung generiert das erste Computersystem auf die Nachricht des dritten Computersystems eine Antwort, die das oder die aus dem ID-Token ausgelesenen Attribute und/oder die Kennung sowie eine Signatur des oder der Attribute und/oder der Kennung beinhaltet. Diese Antwort wird von dem ersten Computersystem an das dritte Computersystem gesendet.

Das dritte Computersystem leitet diese Antwort an das zweite Computersystem weiter und speichert vorzugsweise lokal eine Kopie der Kennung, beispielsweise in Form eines sogenannten Cookies. Dies hat den besonderen Vorteil, dass für eine nachfolgende weitere Dienst-Anforderung des dritten Computersystems an das zweite Computersystem auf die zuvor von dem im ersten Computersystem erzeugte Antwort zurückgegriffen werden kann, indem nämlich das zweite Computersystem die Antwort speichert und von dem dritten Computersystem die in dem Cookie gespeicherte Kennung nach dem Empfang der Dienstanforderung abfragt. Mit Hilfe der Kennung kann das zweite Computersystem nämlich auf die zu der Kennung passende Antwort des ersten Computersystems zugreifen und hat damit Kenntnis von den gewünschten Attributen des Nutzers.

Nach einer Ausführungsform der Erfindung hat die Kennung eine zeitlich und/oder hinsichtlich der Anzahl der Nutzungen beschränkte Gültigkeit. Diese beschränkte Gültigkeit der Kennung kann zum Beispiel in dem zu der Signatur der Kennung gehörenden Zertifikat angegeben sein. Wenn diese Gültigkeit abgelaufen ist, kann das zweite Computersystem nicht mehr die gespeicherte Antwort des ersten Computersystems verwenden, und es muss erneut ein Lesezugriff des ersten Computersystems zum Auslesen des oder der Attribute aus dem ID-Token erfolgen, um eine aktualisierte Antwort zu generieren.

Nach einer Ausführungsform der Erfindung handelt es sich bei dem ersten Computersystem um ein ID-Provider-Computersystem, wie zum Beispiel ein Trustcenter, welches von einem Zertifizierungsdienstanbieter (ZDA) betrieben wird, bei dem zweiten Computersystem um ein Dienst-Computersystem, wie zum Beispiel eine Internetplattform, die von einem kommerziellen Anbieter oder von einer Behörde zur Erbringung einer behördlichen Dienstleistung betrieben wird, und bei dem dritten Computersystem um ein Nutzer-Computersystem, wie zum Beispiel einen PC oder einen Laptopcomputer des Nutzers.

Ausführungsformen der Erfindung sind ferner besonders vorteilhaft, da eine nutzung des ID-Provider-Computersystems von dem Nutzer-Computersystem aus auch dann möglich ist, wenn das Nutzer-Computersystem nicht über eine Schnittstelle zum Zugriff auf den ID-Token verfügt oder wenn an das Nutzer-Computersystem ein entsprechendes Lesegerät zum Zugriff auf den ID-Token nicht anschließbar ist, nicht verfügbar ist, oder aus Gründen der Netzwerkadministration nicht angeschlossen werden darf. In diesem Fall kann der Nutzer sein zumeist ohnehin vorhandenes Mobilfunkgerät ergänzend zu seinem Nutzer-Computersystem verwenden, um den von dem ID-Provider-Computersystem zur Verfügung gestellten Vertrauensanker zu nutzen.

In einem weiteren Aspekt betrifft die Erfindung ein Computerprogrammprodukt, insbesondere ein digitales Speichermedium, mit ausführbaren Programminstruktionen zur Durchführung eines erfindungsgemäßen Verfahrens.

Ausführungsformen des Computerprogrammprodukts sind zur Durchführung der folgenden Schritte ausgebildet: Aufbau einer ersten Verbindung zwischen dem ersten Computersystem und einem dritten Computersystem über ein Netzwerk, Aufbau einer zweiten Verbindung zwischen dem ersten Computersystem und einem Mobilfunkgerät, wobei es sich bei der zweiten Verbindung um eine Mobilfunkverbindung handelt, Erzeugung einer Kennung durch das erste Computersystem, Senden der Kennung über eine der ersten und zweiten Verbindungen von dem ersten Computersystem, Empfang der Kennung von dem ersten Computersystem über die andere der ersten und zweiten Verbindungen, Aufbau einer geschützten Verbindung zwischen dem ersten Computersystem und einem ID-Token, wobei der ID-Token eine erste Schnittstelle aufweist, wobei die geschützte Verbindung über die Mobilfunkverbindung und über die erste Schnittstelle und eine zweite Schnittstelle des Mobilfunkgeräts aufgebaut wird, Authentifizierung des ersten Computersystems gegenüber dem ID-Token über die geschützte Verbindung, nach erfolgreicher Authentifizierung des ersten Computersystems gegenüber dem ID-Token, Lesezugriff des ersten Computersystems auf zumindest ein in dem ID-Token gespeichertes Attribut zur Übertragung des zumindest einen Attributs nach dessen Signierung über das Netzwerk.

In einem weiteren Aspekt betrifft die Erfindung einen ID-Token einer ersten Schnittstelle zur Kommunikation mit einem Mobilfunkgerät, einem geschützten Speicherbereich zur Speicherung von zumindest einem Attribut, Mitteln zur Authentifizierung eines dem ID-Token zugeordneten Nutzers (102) gegenüber dem ID-Token, Mitteln zur Authentifizierung eines ersten Computersystems gegenüber dem ID-Token, Mitteln zum Aufbau einer geschützten Verbindung über das Mobilfunkgerät zu dem ersten Computersystem, über die das erste Computersystem das zumindest eine Attribut auslesen kann, wobei eine notwendige Voraussetzung für das Auslesen des zumindest einen Attributs aus dem ID-Token durch das erste Computersystem die erfolgreiche Authentifizierung des Nutzers und des ersten Computersystems gegenüber dem ID-Token ist.

Nach einer weiteren Ausführungsform wird das signierte Attribut von dem ersten Computersystem an das dritte Computersystem gesendet.

Nach einer weiteren Ausführungsform wird die von dem ersten Computersystem signierte Kennung an das dritte Computersystem gesendet.

Zusätzlich zu der Authentifizierung des ersten Computersystems gegenüber dem ID-Token, wie sie an sich zum Beispiel als so genannte Extended Access Control für maschinenlesbare Reisedokumente (machine-readable travel documents - MRTD) bekannt und von der internationalen Luftfahrtbehörde ICAO spezifiziert ist, muss sich also der Nutzer gegenüber dem ID-Token authentifizieren. Beispielsweise wird durch eine erfolgreiche Authentifizierung des Nutzers gegenüber dem ID-Token dieser freigeschaltet, sodass die weiteren Schritte, nämlich die Authentifizierung des ersten Computersystems gegenüber dem ID-Token und/oder der Aufbau einer geschützten Verbindung zum Auslesen der Attribute, ablaufen können.

Nach einer Ausführungsform der Erfindung hat der ID-Token Mittel für eine Ende-zu-Ende-Verschlüsselung. Dies ermöglicht es, die Verbindung zwischen dem ID-Token und dem ersten Computersystem über ein drittes Computersystem des Nutzers aufzubauen, da der Nutzer aufgrund der Ende-zu-Ende-Verschlüsselung keine Änderungen der über die Verbindung übertragenen Daten vornehmen kann.

In einem weiteren Aspekt betrifft die Erfindung ein erstes Computersystem mit Mitteln zum Empfang einer Nachricht über ein Netzwerk, wobei durch die Nachricht zumindest ein Attribut angefordert wird, Mitteln zur Authentifizierung gegenüber einem ID-Token über eine Mobilfunkverbindung, Mitteln zum Lesen zumindest einen Attributs aus dem ID-Token über eine geschützte Verbindung, wobei das Lesen des zumindest einen Attributs voraussetzt, dass sich ein dem ID-Token zugeordneter Nutzer und das Computersystem gegenüber dem ID-Token authentifiziert haben.

Nach einer Ausführungsform der Erfindung kann das erste Computersystem Mittel zur Generierung einer Aufforderung an den Benutzer zur Authentifizierung gegenüber dem ID-Token aufgrund des Empfangs der Nachricht beinhalten. Nachdem das erste Computersystem die Attributspezifikation beispielsweise von dem zweiten Computersystem empfangen hat, sendet es daraufhin eine Aufforderung an das dritte

Computersystem des Nutzers, sodass der Nutzer dazu aufgefordert wird, sich gegenüber dem ID-Token zu authentifizieren. Nachdem die Authentifizierung des Nutzers gegenüber dem ID-Token erfolgreich durchgeführt worden ist, erhält das erste Computersystem von dem dritten Computersystem eine Bestätigung. Daraufhin authentifiziert sich das erste Computersystem gegenüber dem ID-Token und es wird eine sichere Verbindung zwischen dem ID-Token und dem ersten Computersystem mit einer Ende-zu-Ende-Verschlüsselung aufgebaut.

Ausführungsformen des erfindungsgemäßen ersten Computersystems beinhalten ferner Mittel zur Generierung einer Anforderung an den Nutzer zur Authentifizierung gegenüber dem ID-Token aufgrund des Empfangs der Nachricht.

Ausführungsformen des erfindungsgemäßen ersten Computersystems beinhalten ferner Mittel zur Erzeugung einer Kennung durch welche die Nachricht und die Mobilfunkverbindung eindeutig einander zugeordnet werden und Mittel zum Senden des zumindest einen aus dem ID-Token gelesenen Attributs.

Ausführungsformen des erfindungsgemäßen ersten Computersystems beinhalten ferner Mittel zum Signieren des zumindest einen Attributs und/oder der Kennung, wobei das signierte Attribut und/oder die signierte Kennung gesendet werden.

Ausführungsformen des erfindungsgemäßen ersten Computersystems sind besonders vorteilhaft, da sie in Kombination mit der Notwendigkeit der Authentifizierung des Nutzers gegenüber dem ID-Token einen Vertrauensanker für die unverfäischte digitale Identität des Nutzers bilden. Hierbei ist von besonderem Vorteil, dass dies keine vorherige Registrierung des Nutzers gegenüber dem Computersystem erfordert sowie auch keine zentrale Speicherung der die digitalen Identitäten bildenden Attribute der Nutzer.

Nach einer Ausführungsform der Erfindung empfängt das erste Computersystem zusammen mit der Attributspezifikation einen Identifikator des zweiten Computersystems. Mit Hilfe des Identifikators identifiziert das Computersystem das zweite Computersystem, welches die Identifikationsdienste in Anspruch nehmen möchte, um diese Dienstleistung gegenüber dem zweiten Computersystem zu vergebühren.

Nach einer Ausführungsform der Erfindung handelt es sich bei dem Computersystem um ein behördlich zertifiziertes Trust-Center, insbesondere ein Signaturgesetzkonformes Trust-Center.

Die verschiedenen funktionellen Mittel der Computersysteme, des Mobilfunkgeräts und/oder des ID-Token, wie zum Beispiels die Mittel zum Empfang, die Mittel zur Authentifizierung, die Mittel zum Lesen, die Mittel zur Generierung, die Mittel zur Erzeugung einer Kennung und/oder die Mittel zum Signieren können jeweils durch ein oder mehrere Prozessoren und durch Programminstruktionen realisiert werden, die in einem Speicher gespeichert und von dort zur Ausführung durch den oder die Prozessoren ausgelesen werden können. Ganz oder teilweise kann eine Realisierung der verschiedenen funktionellen Mittel auch schaltungstechnisch erfolgen. Ferner können die verschiedenen funktionellen Mittel auch durch voneinander räumlich getrennte Hardwareeinheiten realisiert werden, die über geeignete Kommunikationsverbindungen miteinander interoperieren.

Im Weiteren werden Ausführungsformen der Erfindung mit Bezugnahme auf die Zeichnungen näher erläutert. Es zeigen:
- Figur 1: ein Blockdiagramm einer ersten Ausführungsform erfindungsgemäßer Computersysteme,
- Figur 2: ein Flussdiagramm einer Ausführungsform eines erfindungsgemäßen Verfahrens,
- Figur 3: ein UML-Diagramm einer weiteren Ausführungsform eines erfindungsgemäßen Verfahrens,
- Figur 4: ein UML-Diagramm einer weiteren Ausführungsform eines erfindungsgemäßen Verfahrens.

Elemente der nachfolgenden Ausführungsformen, die einander entsprechen, werden mit denselben Bezugszeichen gekennzeichnet.

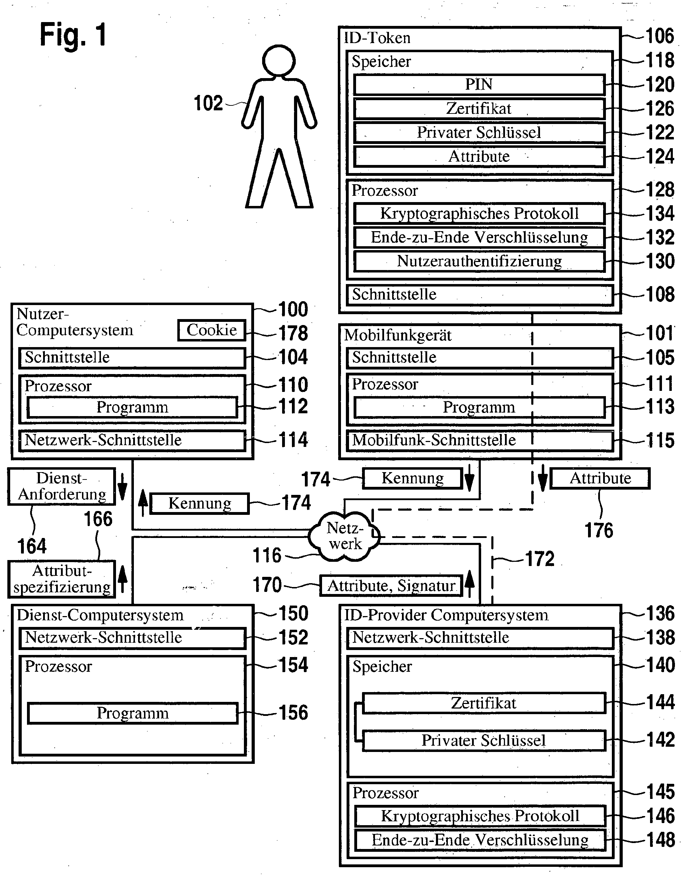

Die Figur 1 zeigt ein Nutzer-Computersystem 100 eines Nutzers 102. Bei dem Nutzer-Computersystem 100 kann es sich um einen Personalcomputer, einen tragbaren Computer, wie zum Beispiel einen Laptop oder Palmtop-Computer, einen Personal Digital Assistant, ein mobiles Telekommunikationsgerät, insbesondere ein Smart Phone, oder dergleichen handeln. Das Nutzer-Computersystem 100 hat eine Schnittstelle 104 zur Kommunikation mit einem ID-Token 106, der eine entsprechende Schnittstelle 108 aufweist.

Das Nutzer-Computersystem 100 hat zumindest einen Prozessor 110 zur Ausführung von Programminstruktionen 112 sowie eine Netzwerk-Schnittstelle 114 zur Kommunikation über ein Netzwerk 116. Bei dem Netzwerk 116 kann es sich um ein Computernetzwerk, wie zum Beispiel das Internet, handeln. Das Netzwerk 116 beinhaltet ein Mobilfunknetzwerk oder ist mit einem Mobilfunknetzwerk verbunden..

Der ID-Token 106 hat einen elektronischen Speicher 118 mit geschützten Speicherbereichen 120, 122 und 124. Der geschützte Speicherbereich 120 dient zur Speicherung eines Referenzwerts, der für die Authentifizierung des Nutzers 102 gegenüber dem ID-Token 106 benötigt wird. Bei diesem Referenzwert handelt es sich beispielsweise um eine so genannte Personal Identification Number (PIN), oder um Referenzdaten für ein biometrisches Merkmal des Nutzers 102, welches für die Authentifizierung des Nutzers gegenüber dem ID-Token 106 verwendet werden kann.

Der geschützte Bereich 122 dient zur Speicherung eines privaten Schlüssels und der geschützte Speicherbereich 124 dient zur Speicherung von Attributen, zum Beispiel des Nutzers 102, wie zum Beispiel dessen Name, Wohnort, Geburtsdatum, Geschlecht, und/oder von Attributen, die den ID-Token selbst betreffen, wie zum Beispiel die Institution, die den ID-Token erstellt oder ausgegeben hat, die Gültigkeitsdauer des ID-Tokens, einen Identifikator des ID-Tokens, wie zum Beispiel eine Passnummer oder eine Kreditkartennummer.

Der elektronische Speicher 118 kann ferner einen Speicherbereich 126 zur Speicherung eines Zertifikats aufweisen. Das Zertifikat beinhaltet einen öffentlichen Schlüssel, der dem in dem geschützten Speicherbereich 122 gespeicherten privaten Schlüssel zugeordnet ist. Das Zertifikat kann nach einem Public Key Infrastruktur (PKI) Standard erstellt worden sein, beispielsweise nach dem X.509 Standard.

Das Zertifikat muss nicht zwangsläufig in dem elektronischen Speicher 118 des ID-Tokens 106 gespeichert sein. Alternativ oder zusätzlich kann das Zertifkat auch in einem öffentlichen Verzeichnisserver gespeichert sein.

Der ID-Token 106 hat einen Prozessor 128. Der Prozessor 128 dient zur Ausführung von Programminstruktionen 130, 132 und 134. Die Programminstruktionen 130 dienen zur Nutzerauthentifizierung, d.h. zur Authentifizierung des Nutzers 102 gegenüber dem ID-Token.

Die Figur 1 zeigt ferner ein Mobilfunkgerät 101 des Nutzers 102. Bei dem Mobilfunkgerät 101 kann es sich zum Beispiel um ein Handy oder ein Smartphone handeln. Das Mobilfunkgeräts 101 hat eine Schnittstelle 105 zur Kommunikation mit der entsprechenden Schnittstelle 108-des ID-Tokens 106. Bei den Schnittstellen 104, 105 und 108 kann es sich um Schnittstellen für eine sogenannte Nahfeldkommunikation handeln.

Das Mobilfunkgerät 101 hat zumindest einen Prozessor 111 zur Ausführung von Programminstruktionen 113 sowie eine Mobilfunk-Schnittstelle 115 zur Kommunikation über das Netzwerk 116.

Bei einer Ausführungsform mit PIN gibt der Nutzer 102 seine PIN zu seiner Authentifizierung in den ID-Token 106 ein, beispielsweise über das Mobilfunkgerät 101.

Beispielsweise gibt der Nutzer 102 seine PIN über eine Tastatur des Mobilfunkgeräts 101 ein; die PIN wird dann von dem Mobilfunkgerät 101 über die Schnittstelle 105 zu dem ID-Token 106 übertragen.

Durch Ausführung der Programminstruktionen 130 wird dann von dem ID-Token 106 auf den geschützten Speicherbereich 120 zugegriffen, um die eingegebene PIN mit dem dort gespeicherten Referenzwert der PIN zu vergleichen. Für den Fall, dass die eingegebene PIN mit dem Referenzwert der PIN übereinstimmt, gilt der Nutzer 102 als authentifiziert.

Alternativ wird ein biometrisches Merkmal des Nutzers 102 erfasst. Beispielsweise hat der ID-Token 106 hierzu einen Fingerabdrucksensor oder ein Fingerabdrucksensor ist an das Mobilfunkgerät 101 angeschlossen oder darin integriert. Die von dem Nutzer 102 erfassten biometrischen Daten werden durch Ausführung der Programminstruktionen 130 bei dieser Ausführungsform mit den in dem geschützten Speicherbereich 120 gespeicherten biometrischen Referenzdaten verglichen. Bei hinreichender Übereinstimmung der von dem Nutzer 102 erfassten biometrischen Daten mit den biometrischen Referenzdaten gilt der Nutzer 102 als authentifiziert.

Die Programminstruktionen 134 dienen zur Ausführung der den ID-Token 106 betreffenden Schritte eines kryptographischen Protokolls zur Authentifizierung eines ID-Provider-Computersystems 136 gegenüber dem ID-Token 106. Bei dem kryptographischen Protokoll kann es sich am ein Challenge-Response-Protokoll basierend auf einem symmetrischen Schlüssel oder einem asymmetrischen Schlüsselpaar handeln.

Beispielsweise wird durch das kryptographische Protokoll ein Extended Access Control-Verfahren implementiert, wie es für maschinenlesbare Reisedokumente (machine-readable travel documents - MRTD) von der internationalen Luftfahrtbehörde (ICAO) spezifiziert ist. Durch erfolgreiche Ausführung des kryptographischen Protokolls authentifiziert sich das ID-Provider-Computersystem 136 gegenüber dem ID-Token und weist dadurch seine Leseberechtigung zum Lesen der in dem geschützten Speicherbereich 124 gespeicherten Attribute nach. Die Authentifizierung kann auch gegenseitig sein, d.h. auch der ID-Token 106 muss sich dann gegenüber dem ID-Provider-Computersystem 136 nach demselben oder einem anderen kryptographischen Protokoll authentifizieren.

Die Programminstruktionen 132 dienen zur Ende-zu-Ende-Verschlüsselung von zwischen dem ID-Token 106 und dem ID-Provider-Computersystem 136 übertragenen Daten, zumindest aber der von dem ID-Provider-Computersystem 136 aus dem geschützten Speicherbereich 124 ausgelesenen Attribute. Für die Ende-zu-Ende-Verschlüsselung kann ein symmetrischer Schlüssel verwendet werden, der beispielsweise anlässlich der Ausführung des kryptographischen Protokolls zwischen dem ID-Token 106 und dem ID-Provider-Computersystem 136 vereinbart wird.

Das ID-Provider-Computersystem 136 hat eine Netzwerk-Schnittstelle 138 zur Kommunikation über das Netzwerk 116. Das ID-Provider-Computersystem 136 hat ferner einen Speicher 140, in dem ein privater Schlüssel 142 des ID-Provider-Computersystems 136 sowie das entsprechende Zertifikat 144 gespeichert sind. Auch bei diesem Zertifikat kann es sich beispielsweise um ein Zertifikat nach einem PKI-Standard, wie zum Beispiel X.509 handeln.

Das ID-Provider-Computersystem 136 hat ferner zumindest einen Prozessor 145 zur Ausführung von Programminstruktionen 146 und 148. Durch Ausführung der Programminstruktionen 146 werden die das ID-Provider-Computersystem 136 betreffende Schritte des kryptographischen Protokolls ausgeführt. Insgesamt wird also das kryptographische Protokoll durch Ausführung der Programminstruktionen 134 durch den Prozessor 128 des ID-Tokens 106 sowie durch Ausführung der Programminstruktionen 1 4 6 durch den Prozessor 145 des ID-Provider-Computersystems 136 implementiert.

Die Programminstruktionen 148 dienen zur Implementierung der Ende-zu-Ende-Verschlüsselung auf Seiten des ID-Provider-Computersystems 136, beispielsweise basierend auf dem symmetrischen Schlüssel, der anlässlich der Ausführung des kryptographischen Protokolls zwischen dem ID-Token 106 und dem ID-Provider-Computersystem 136 vereinbart worden ist. Prinzipiell kann jedes an sich vor bekannte Verfahren zur Vereinbarung des symmetrischen Schlüssels für die Ende-zu-Ende-Verschlüsselung verwendet werden, wie zum Beispiel ein Diffie-Hellman-Schlüsselaustausch.

Das ID-Provider-Computersystem 136 befindet sich vorzugsweise in einer besonders geschützten Umgebung, insbesondere in einem so genannten Trust-Center, sodass das ID-Provider-Computersystem 136 in Kombination mit der Notwendigkeit der Authentifizierung des Nutzers 102 gegenüber dem ID-Token 106 den Vertrauensanker für die Authentizität der aus dem ID-Token 106 ausgelesenen Attribute bildet.

Ein Dienst-Computersystem 150 kann zur Entgegennahme einer Bestellung oder eines Auftrags für eine Dienstleistung oder ein Produkt, insbesondere eine Online-Dienstleistung, ausgebildet sein. Beispielsweise kann der Nutzer 102 online über das Netzwerk 116 ein Konto bei einer Bank eröffnen oder eine andere Finanz- oder Bankdienstleistung in Anspruch nehmen. Das Dienst-Computersystem 150 kann auch als Online-Warenhaus ausgebildet sein, sodass der Benutzer 102 beispielsweise online ein Mobiltelefon oder dergleichen erwerben kann. Ferner kann das Dienst-Computersystem 150 auch zur Lieferung von digitalen Inhalten ausgebildet sein, beispielsweise für den Download von Musik- und/oder Videodaten.

Das Dienst-Computersystem 150 hat hierzu eine Netzwerk-Schnittstelle 152 zur Verbindung mit dem Netzwerk 116. Ferner hat das Dienst-Computersystem 150 zumindest einen Prozessor 154 zur Ausführung von Programminstruktionen 156. Durch Ausführung der Programminstruktionen 156 werden beispielsweise dynamische HTML-Seiten generiert, über die der Nutzer 102 seinen Auftrag oder seine Bestellung eingeben kann.

Je nach der Art des beauftragten oder bestellten Produkts oder der Dienstleistung muss das Dienst-Computersystem 150 ein oder mehrere Attribute des Nutzers 102 und/oder dessen ID-Token 106 anhand eines oder mehrerer vorgegebener Kriterien überprüfen. Nur wenn diese Prüfung bestanden wird, wird die Bestellung oder der Auftrag des Nutzers 102 entgegengenommen und/oder ausgeführt.

Beispielsweise ist es für die Eröffnung eines Bankkontos oder den Kauf eines Mobiltelefons mit einem dazugehörigen Vertrag erforderlich, dass der Nutzer 102 seine Identität gegenuber dem Dienst-Computersystem 150 offenbart, und dass diese Identität überprüft wird. Im Stand der Technik muss der Nutzer 102 hierzu beispielsweise seinen Personalausweis vorlegen. Dieser Vorgang wird durch das Auslesen der digitalen Identität des Nutzers 102 aus seinem ID-Token 106 ersetzt.

Je nach Anwendungsfall muss der Nutzer 102 aber nicht seine Identität gegenüber dem Dienst-Computersystem 150 offenbarten, sondern es reicht die Mitteilung, zum Beispiel nur eines der Attribute aus. Beispielsweise kann der Nutzer 102 über eines der Attribute einen Nachweis erbringen, dass er zu einer bestimmten Personengruppe gehört, die zugangsberechtigt für auf dem Dienst-Computersystem 150 zum Download bereitgehaltener Daten ist. Beispielsweise kann ein solches Kriterium ein Mindestalter des Nutzers 102 sein oder die Zugehörigkeit des Nutzers 102 zu einem Personenkreis, der auf bestimmte vertrauliche Daten eine Zugriffsberechtigung hat.

Zur Inanspruchnahme des von dem Dienst-Computersystem 150 zur Verfügung gestellten Dienstes wird beispielsweise wie folgt vorgegangen:
1. Authentifizierung des Nutzers 102 gegenüber dem ID-Token 106.
   Der Nutzer 102 authentifiziert sich gegenüber dem ID-Token 106. Bei einer Implementierung mit PIN gibt der Nutzer 102 hierzu seine PIN beispielsweise über das Nutzer-Computersystem 100 oder das Mobilfunkgerät 101 in den ID-Token 106 ein. Durch Ausführung der Programminstruktionen 130 prüft dann der ID-Token 106 die Korrektheit der eingegebenen PIN. Wenn die eingegebene PIN mit dem in dem geschützten Speicherbereich 120 gespeicherten Referenzwert der PIN übereinstimmt, so gilt der Nutzer 102 als authentifiziert. Analog kann vorgegangen werden, wenn ein biometrisches Merkmal des Nutzers 102 zu dessen Authentifizierung verwendet wird, wie oben beschrieben.
2. Authentifizierung des ID-Provider-Computersystems 136 gegenüber dem ID-Token 106.
   Hierzu wird eine geschützte Verbindung 172 zwischen dem ID-Token 106 und dem ID-Provider-Computersystem 136 über eine Mobilfunkverbindung sowie über die Schnittstellen 105 und 108 hergestellt. Zum Aufbau der Mobilfunkverbindung zwischen dem Mobilfunkgerät 101 und dem ID-Provider-Computersystem 136 über das Netzwerk 116 kann zum Beispiel ein Mobile IP Protokoll verwendet werden, und zwar nach dem Standard der Internet Engineering Task Force (IETF). Insbesondere kann das Mobilfunkgerät 101 einen Webbrowser oder eine andere TCP/IP fähige Anwendung haben, die für den Aufbau der Mobilfunkverbindung verwendet wird. Die geschützte Verbindung 172 ist in der Fig. 1 als eine gestrichelte Linie gezeigt.
   Beispielsweise überträgt das ID-Provider-Computersystem 136 sein Zertifikat 144 über diese Verbindung 172 an den ID-Token 106. Durch die Programminstruktionen 134 wird dann eine so genannte Challenge generiert, d.h. beispielsweise eine Zufallszahl. Diese Zufallszahl wird mit dem in dem Zertifikat 144 beinhalteten öffentlichen Schlüssel des ID-Provider-Computersystems 136 verschlüsselt. Das resultierende Chiffrat wird von dem ID-Token 106 über die Verbindung 172 an das ID-Provider-Computersystem 136 gesendet. Das ID-Provider-Computersystem 136 entschlüsselt das Chiffrat mit Hilfe seines privaten Schlüssels 142 und erhält so die Zufallszahl. Die Zufallszahl sendet das ID-Provider-Computersystem 136 über die Verbindung 172 an den ID-Token 106 zurück. Durch Ausführung der Programminstruktionen 134 wird dort geprüft, ob die von dem ID-Provider-Computersystem 136 empfangene Zufallszahl mit der ursprünglich generierten Zufallszahl, d.h. der Challenge, übereinstimmt. Ist dies der Fall, so gilt das ID-Provider-Computersystem 136 als gegenüber dem ID-Token 106 authentifiziert. Die Zufallszahl kann als symmetrischer Schlüssel für die Ende-zu-Ende Verschlüsselung verwendet werden.
3. Nachdem sich der Nutzer 102 erfolgreich gegenüber dem ID-Token 106 authentifiziert hat, und nachdem sich das ID-Provider-Computersystem 136 erfolgreich gegenüber dem ID-Token 106 authentifiziert hat, erhält das ID-Provider-Computersystem 136 eine Leseberechtigung zum Auslesen, eines; mehrerer oder aller der in dem geschützten Speicherbereich 124 gespeicherten Attribute. Aufgrund eines entsprechenden Lesekommandos, welches das ID-Provider-Computersystem 136 über die Verbindung 172 an den ID-Token 106 sendet, werden die angeforderten Attribute aus dem geschützten Speicherbereich 124 ausgelesen und durch Ausführung der Programminstruktionen 132 verschlüsselt. Die verschlüsselten Attribute werden über die Verbindung 172 an das ID-Provider-Computersystem 136 übertragen und dort durch Ausführung der Programminstruktionen 148 entschlüsselt. Dadurch erhält das ID-Provider-Computersystem 136 Kenntnis der aus dem ID-Token 106 ausgelesenen Attribute.
   Diese Attribute werden von dem ID-Provider-Computersystem mit Hilfe seines Zertifikats 144 signiert und über das Nutzer-Computersystem 100 oder direkt an das Dienst-Computersystem 150 übertragen. Dadurch wird das Dienst-Computersystem 150 über die aus dem ID-Token 106 ausgelesenen Attribute in Kenntnis gesetzt, sodass das Dienst-Computersystem 150 diese Attribute anhand der vorgegebenen ein oder mehreren Kriterien prüfen kann, um danach ggf. den von dem Benutzer 102 angeforderten Dienst zu erbringen.

Durch die Notwendigkeit der Authentifizierung des Nutzers 102 gegenüber dem ID-Token 106 und der Authentifizierung des ID-Provider-Computersystems 136 gegenüber dem ID-Token 106 ist der notwendige Vertrauensanker geschaffen, sodass das Dienst-Computersystem 150 sicher sein kann, dass die ihm von dem ID-Provider-Computersystem 136 mitgeteilten Attribute des Nutzers 102 zutreffend und nicht verfälscht sind.

Je nach Ausführungsform kann die Reihenfolge der Authentifizierung unterschiedlich sein. Beispielsweise kann vorgesehen sein, dass sich zunächst der Nutzer 102 gegenüber dem ID-Token 106 authentifizieren muss und nachfolgend das ID-Provider-Computersystem 136. Es ist aber grundsätzlich auch möglich, dass sich zunächst das ID-Provider-Computersystem 136 gegenüber dem ID-Token 106 authentifizieren muss und erst nachfolgend der Nutzer 102.

In dem ersten Fall ist der ID-Token 106 beispielsweise so ausgebildet, dass er nur durch Eingabe einer korrekten PIN oder eines korrekten biometrischen Merkmals durch den Nutzer 102 freigeschaltet wird. Erst diese Freischaltung ermöglicht den Start der Programminstruktionen 132 und 134 und damit die Authentifizierung des ID-Provider-Computersystems 136.

Im zweiten Fall ist ein Start der Programminstruktionen 132 und 134 auch bereits möglich, wenn sich der Nutzer 102 noch nicht gegenüber dem ID-Token 106 authentifiziert hat. In diesem Fall sind beispielsweise die Programminstruktionen 134 so ausgebildet, dass das ID-Provider-Computersystem 136 erst dann einen Lesezugriff auf den geschützten Speicherbereich 124 zum Auslesen eines oder mehrerer der Attribute durchführen kann, nachdem von den Programminstruktionen 130 die erfolgreiche Authentifizierung auch des Nutzers 102 signalisiert worden ist.

Von besonderem Vorteil ist die Nutzbarmachung des ID-Tokens 106 für zum Beispiel E-Commerce und E-Government-Anwendungen, und zwar medienbruchfrei und rechtssicher aufgrund des durch die Notwendigkeit der Authentifizierung des Nutzers 102 und des ID-Provider-Computersystems 136 gegenüber dem ID-Token 106 gebildeten Vertrauensankers. Von besonderem Vorteil ist ferner, dass eine zentrale Speicherung der Attribute verschiedener Nutzer 102 nicht erforderlich ist, sodass die im Stand der Technik bestehenden Datenschutzprobleme hiermit gelöst sind. Was die Bequemlichkeit der Anwendung des Verfahrens betrifft, ist von besonderem Vorteil, dass eine vorherige Registrierung des Nutzers 102 zur Inanspruchnahme des ID-Provider-Computersystems 136 nicht erforderlich ist. Vorzugsweise ist das ID-Provider-Computersystem 136 zur Nutzung durch eine Vielzahl von Nutzern ausgebildet. In diesem Fall erfolgt eine Zuordnung des Nutzer-Computersystems 100 des Nutzers 102 zu dem Mobilfunkgerät 101 desselben Nutzers 102, damit das ID-Provider-Computersystem 136 die aus dem ID-Token 106 des Nutzers 102 gelesenen Attribute an das Nutzer-Computersystem 100 dieses Nutzers 102 und nicht eines anderen Nutzers sendet.

Um eine solche Zuordnung herzustellen, wird beispielsweise wie folgt vorgegangen:

Zunächst wird von dem Nutzer-Computersystem 100 eine Dienst-Anforderung 164 über das Netzwerk 116 an das Dienst-Computersystem 150 gesendet. Das Dienst-Computersystem 150 antwortet auf die Dienst-Anforderung 164 mit der Anforderung zumindest eines Attributs des Nutzers 102 des Nutzer-Computersystems 100, beispielsweise also mit einer Attributspezifizierung 166. Diese Attributspezifizierung 166 sendet das Dienst-Computersystem 150 über das Netzwerk 116 an das Nutzer-Computersystem 100.

Zwischen dem Nutzer-Computersystem 100 und dem ID-Provider-Computersystem 136 wird über das Netzwerk 116 dann eine erste Verbindung aufgebaut, indem beispielsweise der Nutzer 102 in ein Browser-Programm des Nutzer-Computersystems 100 die URL des ID-Provider-Computersystems 136 eingibt. Über diese erste Verbindung wird dann die Attributspezifizierung 166 als Nachricht von dem Nutzer-Computersystem 100 an das ID-Provider-Computersystem 136 gesendet.

Das ID-Provider-Computersystem 136 generiert daraufhin eine Kennung, die dem Nutzer-Computersystem 100 zugeordnet ist. Bei der Kennung kann es sich um eine eindeutige Kennung, wie zum Beispiel eine GUID, einen Schlüssel, wie zum Beispiel einen symmetrischen oder asymmetrischen Schlüssel, handeln. Eine solche Kennung 174 sendet das ID-Provider-Computersystem 136 über die erste Verbindung an das Nutzer-Computersystem 100 zurück.

Die Kennung 174 wird dann von dem Nutzer-Computersystem 100 zu dem Mobilfunkgerät 101 übertragen. Beispielsweise sendet das Nutzer-Computersystem 100 hierzu die Kennung 174 von seiner Schnittstelle 104 an die entsprechende Schnittstelle 105 des Mobilfunkgerät 101.

Von dem Mobilfunkgerät 101 wird dann eine Mobilfunkverbindung über das Netzwerk 116 mit dem ID-Provider-Computersystem 136 aufgebaut, beispielsweise indem der Nutzer 102 des Mobilfunkgeräts 101 die URL des ID-Provider-Computersystems 136 in ein Webbrowser-Programm des Mobilfunkgeräts 101, welches durch die Programminstruktionen 112 gebildet wird, eingibt. Durch die Mobilfunkverbindung wird also eine zweite Verbindung hergestellt.

Über die zweite Verbindung sendet das Mobilfunkgerät 101 die Kennung 174 an das ID-Provider-Computersystem 136. Da diese Kennung 174 identisch ist mit derdem Nutzer-Computersystem 100 zugeordneten Kennung 174, baut das ID-Provider-Computersystem 136 die geschützte Verbindung 172 mit Hilfe dieser zweiten Verbindung auf, um das oder die in der Attributspezifizierung 166 spezifizierten Attribute 176 aus dem ID-Token 106 auszulesen.

Nachdem das ID-Provider-Computersystem 136 die Attribute 176 von dem ID-Token 106 über die geschützte Verbindung 172 empfangen hat, so signiert es diese Attribute 176 mit Hilfe seines Zertifikats 144. Daraufhin sendet das ID-Provider-Computersystem 136 eine Antwort 170 über die erste Verbindung an das Nutzer-Computersystem 100, wobei die Antwort die Attribute 176 und deren Signatur beinhaltet. Die Antwort 170 kann auch eine Signatur der Kennung 174 und/oder die Kennung 174 selbst und/oder eine über eine Verkettung der Attribute 176 und der Kennung 174 gebildete Signatur aufweisen.

Von dem Nutzer-Computersystem 100 kann die Antwort 170 dann an das Dienst-Computersystem 150 weitergeleitet werden, welches somit in vertrauenswürdiger Art und Weise von dem in der Attributspezifizierung 166 genannten Attributen und ggf. der Kennung Kenntnis erhält und dann den in der Dienst-Anforderung 164 spezifizierten Dienst erbringen kann.

Alternativ kann die Antwort 170 auch unmittelbar von dem ID-Provider-Computersystem 136 an das Dienst-Computersystem 150 über das Netzwerk 116 übermittelt werden.

Nach einer Ausführungsform wird die Kennung 174 in einem nichtflüchtigen Speicher des Nutzer-Computersystems 100, wie zum Beispiel in einem Festplattenspeicher des Nutzer-Computersystems 100, gespeichert, wie zum Beispiel in Form eines sogenannten Cookies 178. Ferner wird die Antwort 170 in einem nichtflüchtigen Speicher des Dienst-Computersystems 150 gespeichert.

Wenn der Nutzer 102 mittels seines Nutzer-Computersystems 100 zu einem späteren Zeitpunkt erneut eine weitere Dienst-Anforderung 164 an das Dienst-Computersystem 150 richtet, so kann das Dienst-Computersystem 150 über das Netzwerk 116 auf den Cookie 178 zugreifen und so die Kennung 174 aus dem Nutzer-Computersystem 100 auslesen. Wenn diese Kennung ebenfalls Teil der Antwort 170 ist, welche in dem Dienst-Computersystem 150 gespeichert ist, so ist das Dienst-Computersystem 150 dann bereits in Besitz der für die Erbringung des gewünschten Dienstes für den Nutzer 102 erforderlichen Attribute, da es diese gespeicherte Antwort über die Kennung dem Nutzer 102 zuordnen kann.

Nach einer Ausführungsform der Erfindung hat die Kennung 174 eine z.B. hinsichtlich der Zeitdauer oder der Anzahl von Nutzungen der gespeicherten Antwort 170 begrenzte Gültigkeit. Die maximale Gültigkeit der Kennung 174 kann zum Beispiel in Form eines Verfallsdatums in der Antwort 170 angegeben sein. Wenn dieses Verfallsdatum erreicht oder überschritten ist, kann das Dienst-Computersystem 150 die in dem Dienst-Computersystem 150 gespeicherte Antwort nicht mehr verwenden, sondern muss aufgrund einer nachfolgenden weiteren Dienst-Anforderung 164 mit der Attributspezifizierung 166 antworten, sodass der oben beschriebene Ablauf zum Auslesen des oder der Attribute aus dem ID-Token 106 erneut durchgeführt wird.

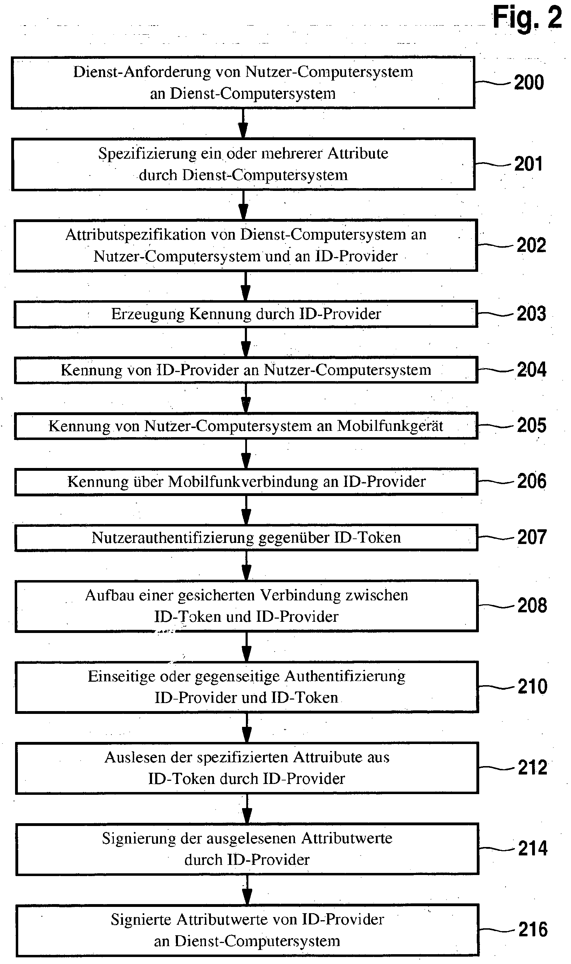

Die Figur 2 zeigt eine Ausführungsform eines erfindungsgemäßen Verfahrens. In dem Schritt 200 wird eine Dienst-Anforderung von dem Nutzer-Computersystem an das Dienst-Computersystem gesendet. Beispielsweise startet der Nutzer hierzu einen Internet-Browser des Nutzer-Computersystems und gibt eine URL zum Aufruf einer Webseite des Dienst-Computersystems ein. In die aufgerufene Webseite gibt der Nutzer dann seine Dienst-Anforderung ein, zum Beispiel zur Bestellung oder Auftragserteilung für einen Dienst oder ein Produkt.

In dem Schritt 201 spezifiziert das Dienst-Computersystem 150 daraufhin ein oder mehrere Attribute, welche es benötigt, um die Berechtigung des Nutzers für die Dienst-Anforderung zu prüfen. Insbesondere kann das Dienst-Computersystem solche Attribute spezifizieren, welche die digitale Identität des Nutzers 102 bestimmen. Diese Spezifizierung der Attribute durch das Dienst-Computersystem 150 kann fest vorgegeben sein oder je nach der Dienst-Anforderung im Einzelfall durch das Dienst-Computersystem 150 anhand vorgegebener Regeln bestimmt werden.

In dem Schritt 202 wird die Attributspezifikation, d.h. die in dem Schritt 201 erfolgte Spezifizierung der ein oder mehreren der Attribute, von dem Dienst-Computersystem an das ID-Provider-Computersystem übertragen, und zwar entweder direkt oder über das Nutzer-Computersystem.

Beispielsweise empfängt das Nutzer-Computersystem von dem Dienst-Computersystem die Attributspezifikation und baut daraufhin eine erste Verbindung über das Netzwerk zu dem ID-Provider-Computersystem auf. Das Nutzer-Computersystem sendet dann die Attributspezifikation über die erste Verbindung an das ID-Provider-Computersystem. In dem Schritt 203 erzeugt das ID-Provider-Computersystem daraufhin eine Kennung, die es dem Nutzer-Computersystem zuordnet, von dem es die Attributspezifikation erhalten hat. Diese Zuordnung wird durch das ID-Provider-Computersysterm gespeichert. In dem Schritt 204 wird die Kennung von dem ID-Provider-Computersystem an das Nutzer-Computersystem gesendet, wie zum Beispiel über die erste Verbindung, die zum Beispiel als eine sogenannte Session ausgebildet sein kann.

In dem Schritt 205 wird die Kennung von dem Nutzer-Computersystem an das Mobilfunkgerät übertragen. Dies kann automatisch erfolgen, wie zum Beispiel über eine NFC-Kommunikation zwischen dem Nutzer-Computersystem und dem Mobilfunkgerät oder auf einem anderen Kommunikationskanal, wie zum Beispiel optisch. Beispielsweise wird die Kennung auf einem Monitor des Nutzer-Computersystems angezeigt und von einer Kamera des Mobilfunkgeräts optisch erfasst.

In dem Schritt 206 wird zwischen dem Mobilfunkgerät und dem ID-Provider-Computersystem eine Mobilfunkverbindung aufgebaut und die Kennung über die Mobilfunkverbindung von dem Mobilfunkgerät an das ID-Provider-Computersystem übertragen. Da die Kennung, die das ID-Provider-Computersystem in dem Schritt 206 über die Mobilfunkverbindung empfängt, identisch ist mit der in dem Schritt 203 erzeugten und dem Nutzer-Computersystem zugeordneten Kennung, ist damit die Mobilfunkverbindung und der über die Mobilfunkverbindung von dem ID-Provider-Computersystem auslesbare ID-Token ebenfalls dem Nutzer-Computersystem bzw. dessen Nutzer zugeordnet.

Um dem ID-Provider-Computersystem die Möglichkeit zu geben, Attribute aus seinem ID-Token auszulesen, authentifiziert sich der Nutzer in dem Schritt 207 gegenüber dem ID-Token.

In dem Schritt 208 wird eine geschützte Verbindung zwischen dem ID-Token und dem ID-Provider-Computersystem aufgebaut (vgl. Verbindung 172 in Fig. 1). Hierbei handelt es sich vorzugsweise um eine Verbindung mit Ende-zu-Ende-Verschlüsselung, beispielsweise nach einem so genannten Secure Messaging-Verfahren.

In dem Schritt 210 erfolgt zumindest eine Authentifizierung des ID-Provider-Computersystems gegenüber dem ID-Token über die in dem Schritt 208 aufgebaute geschützte Verbindung. Zusätzlich kann eine Authentifizierung auch des ID-Tokens gegenüber dem ID-Provider-Computersystem vorgesehen sein.

Nachdem sowohl der Nutzer als auch das ID-Provider-Computersystem erfolgreich gegenüber dem ID-Token authentifiziert worden sind, erhält das ID-Provider-Computersystem von dem ID-Token die Zugriffsberechtigung zum Auslesen der Attribute. In dem Schritt 212 sendet das ID-Provider-Computersystem ein oder mehrere Lesekommandos zum Auslesen der gemäß Attributspezifikation erforderlichen Attribute aus dem ID-Token. Die Attribute werden dann beispielsweise mittels Ende-zu-Ende-Verschlüsselung über die gesicherte Verbindung an das ID-Provider-Computersystem übertragen und dort entschlüsselt.

Die ausgelesenen Attributwerte werden in dem Schritt 214 von dem ID-Provider-Computersystem signiert. In dem Schritt 216 sendet das ID-Provider-Computersystem die signierten Attributwerte über das Netzwerk. Die signierten Attributwerte erreichen das Dienst-Computersystem entweder direkt oder über das Nutzer-Computersystem. Im letzteren Fall kann der Nutzer die Möglichkeit haben, die signierten Attributwerte zur Kenntnis zu nehmen und/oder durch weitere Daten zu ergänzen. Es kann vorgesehen sein, dass die signierten Attributwerte gegebenenfalls mit den ergänzten Daten erst nach Freigabe durch den Nutzer von dem Nutzer-Computersystem an das Dienst-Computersystem weitergeleitet werden. Hierdurch ist größtmögliche Transparenz für den Nutzer hinsichtlich der von dem ID-Provider-Computersystem an das Dienst-Computersystem gesendeten Attribute hergestellt.

Zusätzlich kann auch die Kennung in dem Schritt 214 von dem ID-Provider-Computersystem signiert und in dem Schritt 216 über das Netzwerk an das Dienst-Computersystem oder das Nutzer-Computersystem gesendet werden.

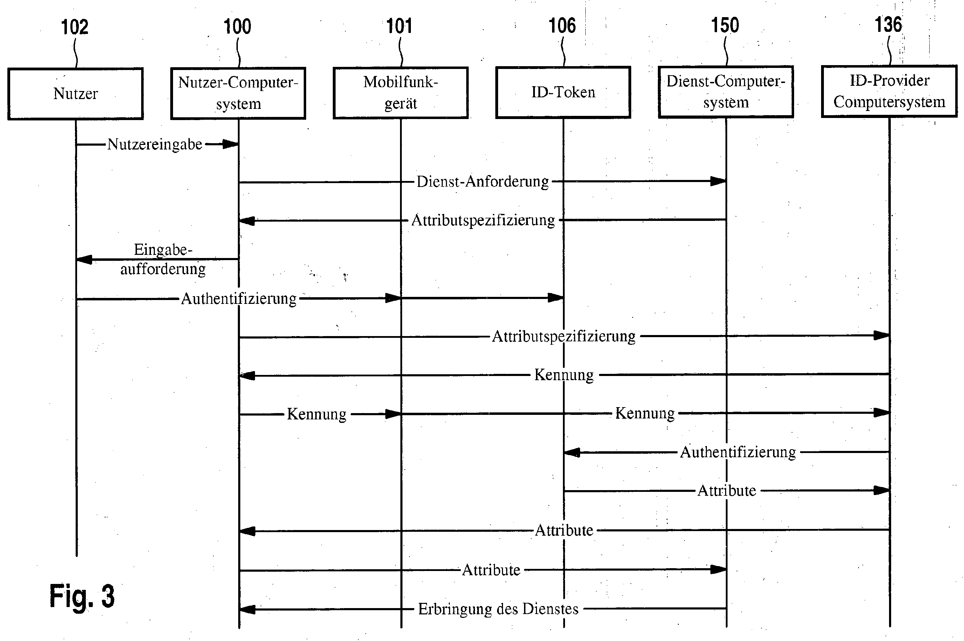

Die Figur 3 zeigt eine weitere Ausführungsform eines erfindungsgemäßen Verfahrens. Durch eine Nutzereingabe eines Nutzers 102 in ein Nutzer-Computersystem 100 spezifiziert der Nutzer 102 einen Dienst eines Dienst-Computersystems, welchen er oder sie in Anspruch nehmen möchte. Dies erfolgt beispielsweise durch Aufruf einer Internetseite des Dienst-Computersystems und einer Auswahl eines der dort angebotenen Dienste. Die Dienst-Anforderung des Nutzers 102 wird von dem N u tzer-Computersystem 100 an das Dienst-Computersystem 150 übertragen.

Das Dienst-Computersystem 150 antwortet auf die Dienst-Anforderung mit einer Attributspezifizierung, d.h. beispielsweise einer Liste von Attributnamen. Nach Empfang der Attributspezifizierung fordert das Nutzer-Computersystem 100 den Nutzer 102, beispielsweise durch eine Eingabeaufforderung, zur Authentifizierung gegenüber dem ID-Token 106 auf.

Der Nutzer schaltet daraufhin sein Mobilfunkgerät 101 ein und authentifiziert sich zunächst gegenüber seinem Mobilfunkgerät 101. Danach authentifiziert sich der Nutzer 102 gegenüber dem ID-Token 106, beispielsweise durch Eingabe seiner PIN in eine Tastatur des Mobilfunkgeräts 101. Das Mobilfunkgerät 101 überträgt die von dem Nutzer 102 eingegebene PIN von seiner Schnittstelle 105 (vgl. Figur 1) an den ID-Token 106.

Die Attributspezifizierung wird von dem Nutzer-Computersystem 100 an ein ID-Provider-Computersystem 136 weitergeleitet. Das ID-Provider-Computersystem 136 generiert daraufhin eine Kennung, die das ID-Provider-Computersystem dem Nutzer-Computersystem 100 zuordnet und an das Nutzer-Computersystem 100 sendet. Die Zuordnung der Kennung zu dem Nutzer-Computersystem 100 wird von dem ID-Provider-Computersystem 136 gespeichert.

Die Kennung wird dann von dem Nutzer-Computersystem 100 zu dem Mobilfunkgerät 101 übertragen. Dies kann manuell erfolgen, indem der Nutzer 102 die auf einer Anzeige des Nutzer-Computersystems 100 angezeigte Kennung abliest und über eine Tastatur des Mobilfunkgeräts 101 in das Mobilfunkgerät 101 eingibt. Die Übertragung kann auch vollautomatisch ohne Involvierung des Nutzers 102 oder teilautomatisch erfolgen, und zwar beispielsweise durch eine Funkübertragung der Kennung von dem Nutzer-Computersystem 100 zu dem Mobilfunkgerät 101 über das Netzwerk 116 (vgl. Figur 1) oder über eine NFC-Kommunikationsverbindung, die zwischen dem Nutzer-Computersystem 100 und dem Mobilfunkgerät 101 aufgebaut wird.

Ferner kann die Übertragung der Kennung zwischen dem Nutzer-Computersystem und dem Mobilfunkgerät 101 auch auf optischem Wege erfolgen, beispielsweise indem die im Klartext auf der Anzeige des Nutzer-Computersystems 100 angezeigte Kennung oder die als 2D-Barcode angezeigte Kennung mit Hilfe einer Kamera des Mobilfunkgeräts 101 optisch erfasst wird.

Zwischen dem Mobilfunkgerät 101 und dem ID-Provider-Computersystem 136 wird eine Mobilfunkverbindung aufgebaut, über die die Kennung von dem Mobilfunkgerät 101 zu dem ID-Provider-Computersystem 136 übertragen wird. Aufgrund der in dem ID-Provider-Computersystem 136 gespeicherten Zuordnung der Kennung zu dem Nutzer-Computersystem 100 ist damit auch diese Mobilfunkverbindung dem Nutzer-Computersystem 100 zugeordnet.

Das ID-Provider-Computersystem 136 kommuniziert dann über die Mobilfunkverbindung und das Mobilfunkgerät 101 mit dem ID-Token 106, um sich gegenüber dem ID-Token 106 zu authentifizieren und um eine Leseanforderung zum Lesen der Attribute gemäß der Attributspezifizierung an den ID-Token 106 zu richten.

Unter der Voraussetzung der vorherigen erfolgreichen Authentifizierung des Nutzers 102 und des ID-Provider-Computersystems 136 antwortet der ID-Token 106 auf die Leseanforderung mit den gewünschten Attributen. Das ID-Provider-Computersystem 136 signiert die Attribute und sendet die signierten Attribute an das Nutzer-Computersystem 100. Nach Freigabe durch den Nutzer 102 werden die signierten Attribute dann an das Dienst-Computersystem 150 übertragen, welches dann ggf. den gewünschten Dienst erbringen kann.

Neben den Attributen kann das ID-Provider-Computersystem 136 auch die Kennung signieren und zusammen mit den signierten Attributen an das Nutzer-Computersystem 100 sendern.

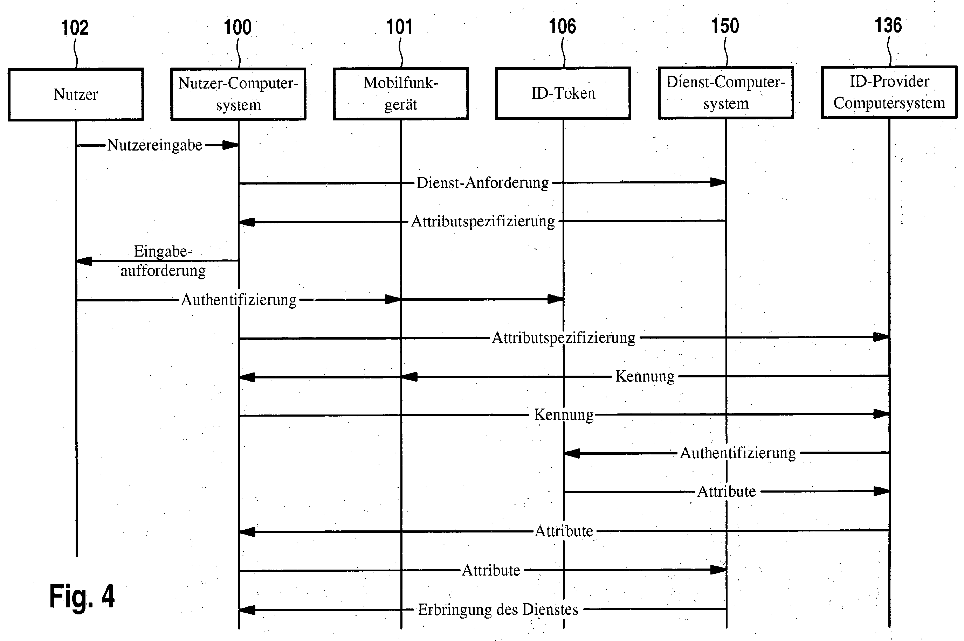

Die Figur 4 zeigt eine weitere Ausführungsform eines erfindungsgemäßen Verfahrens. Von der Ausführungsform gemäß Figur 3 unterscheidet sich die Ausführungsform der Figur 4 insbesondere dadurch, dass das ID-Provider-Computersystem 136 die Kennung, welche es nach Empfang der Attributspezifikation von dem Nutzer-Computersystem 100 generiert, nicht an das Nutzer-Computersystem 100 sendet, sondern an das Mobilfunkgerät 101. Die Kennung wird dann von dem Mobilfunkgerät 101 an das Nutzer-Computersystem 100 übertragen, und zwar wiederum entweder manuell durch den Nutzer 102 oder automatisch oder teilautomatisch, z.B. über einen Funkkanal oder einen optischen Kanal.

Das Nutzer-Computersystem 100 sendet die Kennung dann an das ID-Provider-Computersystem 136, sodass die der Kennung zugeordnete Mobilfunkverbindung zwischen dem Mobilfunkgerät 101 und dem ID-Provider-Computersystem 136 auch dem Nutzer-Computersystem 100 zugeordnet ist.

In einem weiteren Ausführungsvariante ist es möglich, dass die Attributspezifizierung von dem Nutzer-Computersystem 100 an das Mobilfunkgerät 101 übertragen wird, und zwar manuell oder automatisch, und dass die Attributspezifizierung statt von dem Nutzer-Computersystem 100 von dem Mobilfunkgerät 101 an das ID-Provider-Computersystem 136 gesendet wird.

Ferner ist es auch möglich, dass das ID-Provider-Computersystem die Kennung sowohl an das Mobilfunkgerät 101 als auch an das Nutzer-Computersystem 100 überträgt. Die Übertragung der Kennung kann dann wahlweise von dem Mobilfunkgerät 101 an das Nutzer-Computersystem 100 oder in der anderen Richtung erfolgen.

### Bezugszeichenliste

- 100: Nutzer-Computersystem
- 101: Mobilfunkgerät
- 102: Nutzer
- 104: Schnittstelle
- 105: Schnittstelle
- 106: ID-Token
- 108: Schnittstelle
- 110: Prozessor
- 111: Prozessor112 Programminstruktionen
- 113: Programminstruktionen
- 114: Netzwerk-Schnittstelle
- 115: Mobilfunk-Schnittstelle
- 116: Netzwerk
- 118: elektronischer Speicher
- 120: geschützter Speicherbereich
- 122: geschützter Speicherbereich
- 124: geschützter Speicherbereich
- 126: Speicherbereich
- 128: Prozessor
- 130: Programminstruktionen
- 132: Programminstruktionen
- 134: Programminstruktionen
- 136: ID-Provider-Computersystem
- 138: Netzwerk-Schnittstelle
- 140: Speicher
- 142: privater Schlüssel
- 144: Zertifikat
- 145: Prozessor
- 146: Programminstruktionen
- 148: Programminstruktionen
- 149: Programminstruktionen
- 150: Dienst-Computersystem
- 152: Netzwerk-Schnittstelle
- 154: Prozessor
- 156: Programminstruktionen
- 158: Konfigurationsdatensatz
- 160: Konfigurationsdatensatz
- 161: Konfigurationsdatensatz
- 162: Nutzereingabe
- 164: Dienst-Anforderung
- 166: Attributspezifizierung
- 168: Anforderung
- 170: Antwort
- 172: Verbindung
- 174: Kennung
- 176: Attribut
- 178: Cookie

## Patentansprüche

1. Verfahren zum Lesen zumindest eines in einem ID-Token (106, 106') gespeicherten Attributs, wobei der ID-Token einem Nutzer (102) zugeordnet ist und wobei der ID-Token eine erste Schnittstelle (108) aufweist, mit folgenden Schritte
- Authentifizierung des Nutzers gegenüber dem ID-Token,
- Aufbau einer Mobilfunkverbindung zwischen einem Mobilfunkgerät (101) und einem ersten Computersystem (136), wobei das Mobilfunkgerät eine zweite Schnittstelle (105) aufweist,
- Aufbau einer geschützten Verbindung (172) über die Mobilfunkverbindung und über die ersten und zweiten Schnittstellen zwischen dem ersten Computersystems und dem ID-Token, wobei die ersten und zweiten Schnittstellen für eine drahtlose Kommunikation ausgebildet sind, wobei die Reichweite weniger als 1 m, insbesondere weniger als 20 cm beträgt, und wobei die ersten und zweiten Schnittstellen insbesondere nach einem Near Field Communication, NFC, und/oder ISO/IEC 1443A Standard ausgebildet sein können,
- Authentifizierung des ersten Computersystems (136) gegenüber dem ID-Token über die geschützte Verbindung, wobei die Authentifizierung des ersten Computersystems gegenüber dem ID-Token mit Hilfe eines Zertifikats (144) des ersten Computersystems erfolgt, wobei das Zertifikat eine Angabe derjenigen in dem ID-Token gespeicherten Attribute beinhaltet, für welche das erste Computersystem für den Lesezugriff berechtigt ist, wobei der ID-Token die Leseberechtigung des ersten Computersystems für den Lesezugriff auf zumindest eines der Attribute mit Hilfe des Zertifikats überprüft,
- nach erfolgreicher Authentifizierung des Nutzers und des ersten Computersystems gegenüber dem ID-Token, Lesezugriff des ersten Computersystems auf das zumindest eine in dem ID-Token gespeicherte Attribut zur Übertragung des zumindest einen Attributs nach dessen Signierung über ein Netzwerk (116).

2. Verfahren nach Anspruch 1 mit folgenden weiteren Schritten:
- Signierung des zumindest einen aus dem ID-Token gelesenen Attributs durch das erste Computersystem,
- Übertragung des signierten Attributs von dem ersten Computersystem an ein zweites Computersystem (150) oder ein drittes Computersystem (100),
wobei das Verfahren insbesondere die folgenden weiteren Schritte aufweist:
- Senden einer Anforderung (164) von einem dritten Computersystem (100) an das zweite Computersystem,
- Spezifizierung eines oder mehrerer Attribute durch das zweite Computersystem,
- Senden der Attributspezifizierung (166) von dem zweiten Computersystem an das erste Computersystem, wobei der Lesezugriff des ersten Computersystem erfolgt, um die in der Attributspezifizierung spezifizierten ein oder mehrere Attribute aus dem ID-Token auszulesen.

3. Verfahren nach Anspruch 2, mit folgenden weiteren Schritten:
- Senden einer Nachricht von dem dritten Computersystem (100) an das erste Computersystem (136),
- Erzeugung einer Kennung aufgrund der Nachricht durch das erste Computersystem,
- Senden der Kennung von dem ersten Computersystem an das dritte Computersystem,
- Übertragung der Kennung von dem dritten Computersystem an das Mobilfunkgerät,
- Übertragung der Kennung von dem Mobilfunkgerät an das erste Computersystem über die Mobilfunkverbindung,
und/oder
- wobei das erste Computersystem das zumindest eine signierte Attribut an das durch die Kennung identifizierte dritte Computersystem sendet.

4. Verfahren nach Anspruch 2 oder 3, mit folgenden weiteren Schritten:
- Erzeugung einer Kennung durch das erste Computersystem,
- Senden der Kennung von dem ersten Computersystem an das Mobilfunkgerät über die Mobilfunkverbindung,
- Übertragung der Kennung von dem Mobilfunkgerät an das dritte Computersystem,
- Senden der Kennung von dem dritten Computersystem an das erste Computersystem,
und/oder
- wobei das erste Computersystem das zumindest eine signierte Attribut an das durch die Kennung identifizierte dritte Computersystem sendet.

5. Verfahren nach einem der vorhergehenden Ansprüche, wobei die geschützte Verbindung eine Ende-zu-Ende-Verschlüsselung zwischen dem ID-Token und dem ersten Computersystem aufweiset.

6. Verfahren nach einem der vorhergehenden Ansprüche 3 bis 5, wobei die Übertragung der Kennung zwischen dem dritten Computersystem und dem Mobilfunkgerät optisch erfolgt,
und/oder
- wobei die Kennung auf einer Anzeigevorrichtung angezeigt und mit einem optischen Sensor erfasst wird,
und/oder
- wobei die Kennung als maschinenlesbares Muster, insbesondere als Barcode, vorzugsweise als 2D Barcode, angezeigt wird.

7. Verfahren nach einem der vorhergehenden Ansprüche 2 - 4,6, wobei die Kennung von dem dritten Computersystem an das Mobilfunkgerät über eine Funkfrequenz übertragen wird.

8. Verfahren nach einem der vorhergehenden Ansprüche 3, 4, 6, 7, wobei die Kennung in einem nichtflüchtigen Speicher des dritten Computersystems gespeichert wird, insbesondere als Cookie (178), und wobei das zumindest eine Attribut und die Kennung von dem ersten Computersystem signiert und zusammen mit dieser Signatur über das Netzwerk übertragen werden.

9. Computerprogrammprodukt mit von einem ersten Computersystem (136) ausführbaren Instruktionen zur Durchführung der Schritte nach einem der vorigen Ansprüche 1-8.

10. Computersystem mit Mitteln zur Durchführung der Schritte nach einem der vorigen Ansprüche 1-8.

## Claims

1. A method for reading at least one attribute stored in an ID token (106, 106'), wherein the ID token is assigned to a user (102), and wherein the ID token has a first interface (108), said method comprising the following steps:
- authenticating the user to the ID token,
- establishing a mobile radio link between a mobile radio device (101) and a first computer system (136), wherein the mobile radio device has a second interface (105),
- establishing a protected link (172) via the mobile radio link and via the first and second interfaces between the first computer system and the ID token, wherein the first and second interfaces are configured for a wireless communication, wherein the range is less than 1 m, in particular less than 20 cm, and wherein the first and second interfaces can be configured in particular in accordance with a Near Field Communication, NFC, and/or ISO/IEC 1443A standard,
- authenticating the first computer system (136) to the ID token via the protected link, wherein the authentication of the first computer system to the ID token is performed with the aid of a certificate (144) of the first computer system, wherein the certificate includes a specification of those attributes stored in the ID token for which the first computer system is authorised for read access, wherein the ID token checks the read authorisation of the first computer system for the read access to at least one of the attributes with the aid of the certificate,
- following successful authentication of the user and the first computer system to the ID token, enabling read access of the first computer system to the at least one attribute stored in the ID token in order to transmit the at least one attribute, when it has been signed, via a network (116).

2. The method according to Claim 1, having the following further steps:
- signing the at least one attribute read from the ID token by the first computer system,
- transmitting the signed attribute from the first computer system to a second computer system (150) or a third computer system (100),
wherein the method in particular comprises the following further steps:
- sending a request (164) from a third computer system (100) to the second computer system,
- specifying one or more attributes by the second computer system,
- sending the attribute specification (166) from the second computer system to the first computer system, wherein the read access of the first computer system is enabled in order to read the one or more attributes specified in the attribute specification from the ID token.

3. The method according to Claim 2, having the following further steps:
- sending a message from the third computer system (100) to the first computer system (136),
- generating an identifier on account of the message by the first computer system,
- sending the identifier from the first computer system to the third computer system,
- transmitting the identifier from the third computer system to the mobile radio device,
- transmitting the identifier from the mobile radio device to the first computer system via the mobile radio link,
and/or
- wherein the first computer system sends the at least one signed attribute to the third computer system identified by the identifier.

4. The method according to Claim 2 or 3, having the following further steps:
- generating an identifier by the first computer system,
- sending the identifier from the first computer system to the mobile radio device via the mobile radio link,
- transmitting the identifier from the mobile radio device to the third computer system,
- sending the identifier from the third computer system to the first computer system,
and/or
- wherein the first computer system sends the at least one signed attribute to the third computer system identified by the identifier.

5. The method according to one of the preceding claims, wherein the protected link has end-to-end encryption between the ID token and the first computer system.

6. The method according to one of preceding Claims 3 to 5, wherein the identifier is transmitted between the third computer system and the mobile radio device optically,
and/or
- wherein the identifier is displayed on a display device and is detected using an optical sensor,
and/or
- wherein the identifier is displayed as a machine-readable pattern, in particular as a barcode, preferably as a 2D barcode.

7. The method according to one of preceding Claims 2 to 4 and 6, wherein the identifier is transmitted from the third computer system to the mobile radio device via a radio frequency.

8. The method according to one of preceding Claims 3, 4, 6, or 7, wherein the identifier is stored in a non-volatile memory of the third computer system, in particular as a cookie (178), and wherein the at least one attribute and the identifier are signed by the first computer system and are transmitted together with this signature via the network.

9. A computer program product having instructions which can be executed by a first computer system (136) for the purpose of carrying out the steps according to one of preceding Claims 1 to 8.

10. A computer system having means for carrying out the steps according to one of preceding Claims 1 to 8.

## Revendications

1. Procédé de lecture d'au moins un attribut stocké dans un jeton d'ID (106, 106'), où le jeton d'ID est associé à un utilisateur (102) et où le jeton d'ID présente une première interface (108), avec les étapes suivantes :
- authentification de l'utilisateur vis-à-vis du jeton d'ID,
- création d'une liaison radio mobile entre un appareil radio mobile (101) et un premier système informatique (136), où l'appareil radio mobile présente une deuxième interface (105),
- création d'une liaison sécurisée (172) par l'intermédiaire de la liaison radio mobile et par l'intermédiaire des première et deuxième interfaces entre le premier système informatique et le jeton d'ID, où les première et deuxième interfaces sont conçues pour une communication sans fil, où la portée est située inférieure à 1 m, notamment inférieure à 20 cm, et où les première et deuxième interfaces peuvent être conçues notamment selon une communication en champ proche (NFC) et/ou selon la norme ISO/EC 1443A,
- authentification du premier système informatique (136) vis-à-vis du jeton d'ID par l'intermédiaire de la liaison sécurisée, où l'authentification du premier système informatique vis-à-vis du jeton d'ID est effectuée à l'aide d'un certificat (144) du premier système informatique, où le certificat contient une indication des attributs stockés dans le jeton d'ID pour lesquels le premier système informatique est habilité à avoir l'accès en lecture, où le jeton d'ID contrôle l'habilitation en lecture du premier système informatique pour l'accès en lecture sur au moins l'un des attributs à l'aide du certificat,
- après une authentification de l'utilisateur et du premier système informatique par rapport au jeton d'ID couronnée de succès, accès en lecture du premier système informatique sur l'au moins un attribut stocké dans le jeton d'ID pour la transmission de l'au moins un attribut en fonction de sa signature par l'intermédiaire d'un réseau (116).

2. Procédé selon la revendication 1 avec les autres étapes suivantes :
- signature de l'au moins un attribut lu à partir du jeton d'ID par le premier système informatique,
- transmission de l'attribut signé par l'intermédiaire du premier système informatique vers un deuxième système informatique (150) ou un troisième système informatique (100),
où le procédé présente notamment les autres étapes suivantes :
- envoi d'une requête (164) d'un troisième système informatique (100) envers le deuxième système informatique,
- spécification d'un ou de plusieurs attributs par le deuxième système informatique,
- envoi de la spécification d'attribut (166) du deuxième système informatique vers le premier système informatique, où se produit l'accès en lecture du premier système informatique afin de lire l'attribut ou plusieurs attributs spécifiés dans la spécification d'attributs à partir du jeton d'ID.

3. Procédé selon la revendication 2, avec les autres étapes suivantes :
- envoi d'une information du troisième système d'ordinateur (100) vers le premier système d'ordinateur (136),
- création d'une identification en raison de l'information par le premier système informatique,
- envoi de l'identification du premier système informatique au troisième système informatique,
- transmission de l'identification du troisième système informatique vers l'appareil radio mobile,
- transmission de l'identification de l'appareil radio mobile au premier système informatique par l'intermédiaire d'une liaison radio mobile,
et/ou
- où le premier système informatique envoie l'au moins un attribut signé au troisième système informatique identifié par l'identification.

4. Procédé selon les revendications 2 ou 3, avec les autres étapes suivantes :
- création d'une identification par le premier système informatique,
- envoi de l'identification du premier système informatique à l'appareil radio mobile par l'intermédiaire de la liaison radio mobile,
- transmission de l'identification de l'appareil radio mobile au troisième système informatique,
- envoi de l'identification du troisième système informatique au premier système informatique,
et/ou
- où le premier système informatique envoie l'au moins un attribut signé au troisième système informatique identifié par l'identification.

5. Procédé selon l'une des revendications précédentes, où la liaison sécurisée présente un cryptage de bout en bout entre le jeton d'ID et le premier système informatique.

6. Procédé selon l'une des revendications précédentes 3 à 5, où la transmission de l'identification s'effectue de manière optique entre le troisième système informatique et l'appareil radio mobile, et/ou
- où l'identification est indiquée sur un dispositif d'affichage et est détectée par un capteur optique,
et/ou
- où l'identification est indiquée sous la forme d'un motif lisible par machine, notamment sous la forme d'un code-barres, de préférence, sous forme d'un code-barres en 2D.

7. Procédé selon l'une des revendications précédentes 2 à 4, 6, où l'identification est transmise par le troisième système informatique à l'appareil radio mobile par l'intermédiaire d'une fréquence radio.

8. Procédé selon l'une des revendications précédentes 3, 4, 6, 7, où l'identification est stockée dans une mémoire non volatile du troisième système informatique, notamment sous forme de cookie (178), et où l'au moins un attribut et l'identification sont signés par le premier système informatique et sont transmis ensemble avec cette signature par l'intermédiaire du réseau.

9. Produit de programme informatique avec des instructions exécutables par un premier système informatique (136) pour la réalisation des étapes selon l'une des revendications précédentes 1 à 8.

10. Système informatique avec des moyens pour l'exécution des étapes selon l'une des revendications précédentes 1 à 8.
